# EUROPÄISCHE PATENTSCHRIFT

(11) **EP 4 476 097 B1**
(45) Veröffentlichungstag und Bekanntmachung des Hinweises auf die Patenterteilung: **31.12.2025**
(21) Anmeldenummer: 23700939.4
(22) Anmeldetag: 12.01.2023
(51) Int. Cl.: B60N 2/62, B60N 2/02, B60N 2/90

(54) **VERSTELLVORRICHTUNG FÜR EINEN SITZ**
ADJUSTMENT DEVICE FOR A SEAT
DISPOSITIF DE RÉGLAGE POUR SIÈGE

(30) Priorität: 07.02.2022 DE 102022102739
(43) Veröffentlichungstag der Anmeldung: 18.12.2024
(73) Patentinhaber: AUDI AG, 85057 Ingolstadt (DE)
(72) Erfinder: ECKENROTH, Dirk, 85117 Eitensheim (DE)
(86) Internationale Anmeldenummer: PCT/EP2023/050661
(87) Internationale Veröffentlichungsnummer: WO 2023/147976

(56) Entgegenhaltungen:
- DE-U1- 29 903 389

## Beschreibung

Die Erfindung betrifft eine Verstellvorrichtung für einen Sitz und einen Sitz. Die Druckschrift DE 20 2019 104 366 U1 beschreibt einen Fahrzeugsitz. Ein Verstellsitzmöbel ist aus der Druckschrift DE 1 529 415 B1 bekannt.

Ein Sessel ist in der Druckschrift DE 20 2012 010 860 U1 beschrieben.

Die DE 29903389 U1 offenbart eine Verstellvorrichtung für einen Sitz, die als Fortsatz einer Sitzebene des Sitzes ausgebildet ist, wobei die Verstellvorrichtung eine längenverstellbare Verstellmechanik und mindestens ein elastisches Zugelement aufweist.

Vor diesem Hintergrund war es eine Aufgabe, eine Verstellmöglichkeit für einen Sitz zu verbessern.

Diese Aufgabe wird durch eine Verstellvorrichtung mit der Merkmalen des unabhängigen Patentanspruchs 1 gelöst. Ausführungsformen der Verstellvorrichtung und des Sitzes gehen aus den abhängigen Patentansprüchen und der Beschreibung hervor.

Die erfindungsgemäße Verstellvorrichtung ist für einen Sitz ausgebildet und/oder vorgesehen und weiterhin als längenverstellbarer Fortsatz einer Sitzebene, die eine Person mit ihrem Gesäß, zumindest ihren Oberschenkeln und zumindest teilweise auch mit ihren Unterschenkeln, berührt, wenn sie auf der Sitzebene sitzt, ausgebildet. Dabei weist diese Verstellvorrichtung eine längenverstellbare bzw. hinsichtlich ihrer Länge verstellbare und/oder expandierbare, bspw. verlängerbare bzw. zu verlängernde und verkürzbare bzw. zu verkürzende Verstellmechanik auf. Außerdem weist die Verstellvorrichtung mindestens ein Zugelement auf. Die Verstellmechanik der Verstellvorrichtung weist als Komponenten eine zentrale Wickelrolle für das mindestens eine Zugelement, mindestens zwei bzw. mehrere Gleitrollen, sowie mindestens ein vorderes Abschlussteil und mindestens ein hinteres Abschlussteil auf. Dabei ist jedes Abschlussteil mit mindestens einer Gleitrolle verbunden. Weiterhin ist ein erstes Ende des mindestens einen Zugelements an der zentralen Wickelrolle befestigt. Das mindestens eine Zugelement ist ausgehend von der zentralen Wickelrolle nacheinander über die Gleitrollen an den Abschlussteilen geführt und berührt und/oder umschließt jede dieser Gleitrollen in der Regel zumindest tangential, wobei das mindestens eine Zugelement einen äußeren zylinderförmigen Mantel einer jeweiligen Gleitrolle in Ausgestaltung in einem Winkelbereich bis 90°, ggf. bis maximal 120° umschließt, wobei das mindestens eine Zugelement entlang der jeweiligen Gleitrolle zumindest tangential geführt ist. Außerdem ist ein zweites Ende des mindestens einen Zugelements an einem Befestigungselement eines Tragkörpers der Sitzebene befestigt. Dabei erstreckt sich das mindestens eine Zugelement zwischen der Wickelrolle und dem Befestigungselement an dem Tragkörper.

Weiterhin ist die Wickelrolle dazu ausgebildet, bei einer Änderung und/oder Verstellung einer Länge der Verstellmechanik das mindestens eine Zugelement jeweils aufzuwickeln oder abzuwickeln. Bei einer derartigen Änderung der Länge gleitet und/oder rollt das mindestens eine Zugelement auf den Gleitrollen und/oder entlang der Gleitrollen und ist bzw. wird zwischen der Wickelrolle und dem Tragkörper straff gespannt. Bei der Änderung und/oder Verstellung der Länge der Verstellmechanik wird diese entweder verlängert oder verkürzt. Dabei ist eine derartige Verstellung durch mindestens einen Antrieb als weitere Komponente der Verstellvorrichtung bspw. automatisch durchführbar. Falls die Verstellmechanik verlängert wird, wird das mindestens eine Zugelement von der zentralen Wickelrolle abgewickelt. Falls dagegen die Verstellmechanik verkürzt wird, wird das mindestens eine Zugelement auf die zentrale Wickelrolle aufgewickelt. Hierbei ist es möglich, dass der mindestens eine Antrieb der Verstellmechanik mit einer Welle der zentralen Wickelrolle gekoppelt ist.

In Ausgestaltung weist die Verstellmechanik mindestens eine Reihe aus bzw. mit mehreren Armen auf. Dabei ist es möglich, dass die Arme der mindestens einen Reihe zwischen jeweils einem vorderen und einem hinteren Abschlussteil angeordnet sind, wobei das vordere und hintere Abschlussteil eine jeweilige Reihe aus Armen fortsetzen und/oder vorne bzw. hinten begrenzen. Alternativ oder ergänzend sind jeweils zwei Arme innerhalb einer jeweiligen Reihe über mindestens ein Drehelement miteinander drehbar verbunden sind. Alternativ oder ergänzend ist jeweils mindestens ein Ende jeweils eines Arms ebenfalls mit einer Gleitrolle verbunden, deren zylinderförmiger Mantel von dem mindestens einen Zugelement ebenfalls zumindest tangential berührt wird. Dabei ist es möglich, dass das zwischen der Wickelrolle und dem Tragkörper gespannte mindestens eine Zugelement beim Ändern der Länge der Verstellmechanik ebenfalls an bzw. auf den Gleitrollen bzw. ihren zylinderförmigen Mänteln und zwischen Enden von jeweils zwei Armen zweier Reihen gleitet und/oder rollt. In diesem Fall berührt das mindestens eine Zugelement nicht nur Gleitrollen an den Abschlussteilen, sondern auch die Gleitrollen an Enden der Arme.

In weiterer Ausgestaltung ist vorgesehen, dass die Verstellmechanik bspw. zwei Reihen aus mehreren Armen aufweist, die zueinander parallel angeordnet sind. Dabei weist die Verstellmechanik pro Reihe zwei vordere, also ein Paar vordere Arme und zwei hintere Arme, also ein Paar hintere Arme auf, zwischen denen mindestens zwei mittlere Arme, also mindestens ein Paar mittlere Arme angeordnet sind. Dabei ist es möglich, dass jeweils zwei benachbarte Arme einer Reihe entlang eines jeweiligen Arms, bspw. weitgehend in der Mitte des jeweiligen Arms, über ein Drehelement miteinander und relativ zueinander drehbar verbunden sind. In Ausgestaltung ist es möglich, dass jeweils eine Reihe aus mehreren Armen als Nürnberger Schere ausgebildet und/oder zu bezeichnen ist, die zwischen dem vorderen und hinteren Anschlussteil längenverstellbar angeordnet ist.

In Ausgestaltung weist jedes Abschlussteil, also jedes vordere und jedes hintere Abschlussteil, ein oberes und ein unteres Ende auf. Dabei ist ein oberes Ende eines jeweiligen vorderen bzw. hinteren Abschlussteils und ein unteres Ende eines jeweiligen vorderen und hinteren Abschlussteils mit einer daran angeordneten Gleitrolle verbunden, wobei also an jeweils einem Ende eines Abschlussteils eine Gleitrolle angeordnet ist. Dabei ist bzw. wird jede Gleitrolle an den beiden Enden eines jeweiligen Abschlussteils von dem mindestens einen Zugelement zumindest tangiert.

Es ist alternativ oder ergänzend möglich, dass die Verstellvorrichtung zwei zueinander parallel angeordnete vordere Abschlussteile und zwei zueinander parallel angeordnete hintere Abschlussteile aufweist, wobei bspw. in einer ersten Reihe zwischen einem ersten vorderen Abschlussteil und einem ersten hinteren Abschlussteil mehrere erste Arme und in einer dazu parallel angeordneten zweiten Reihe zwischen einem zweiten vorderen Abschlussteil und einem zweiten hinteren Abschlussteil mehrere zweite Arme angeordnet sind. Dabei sind jeweils zwei zueinander parallel angeordnete Abschlussteile der beiden Reihen über mindestens eine Gleitrolle zwischen den beiden Reihen miteinander verbunden.

Alternativ oder ergänzend ist mindestens ein Ende jeweils eines Arms ebenfalls mit einer und/oder einer weiteren Gleitrolle verbunden. Es ist auch möglich, dass jeweils ein vorderer Arm der jeweiligen Reihe mit einem vorderen Abschlussteil über mindestens ein Drehelement und/oder eine Gleitrolle beweglich, bspw. drehbar und/oder, etwa über ein Langloch in dem vorderen Abschlussteil, verschiebbar verbunden ist. Entsprechend ist es möglich, dass jeweils ein hinterer Arm der jeweiligen Reihe mit einem hinteren Abschlussteil über mindestens ein Drehelement und/oder eine Gleitrolle beweglich, bspw. drehbar und/oder, bspw. über ein Langloch in dem hinteren Abschlussteil, verschiebbar verbunden ist. Alternativ oder ergänzend ist jeweils eine Gleitrolle mit einem Ende eines jeweiligen Arms einer ersten Reihe und einem Ende eines jeweiligen Arms einer zweiten Reihe über eine Gleitrolle verbunden, wobei Gleitrollen, die Enden von jeweils zwei Armen beider Reihen verbinden, zwischen den beiden Reihen angeordnet sind.

In Ausgestaltung ist das zweite Ende des mindestens einen Zugelements an dem Befestigungselement des Tragkörpers oberhalb oder unterhalb der Verstellmechanik befestigt. Dabei ist es möglich, dass das mindestens eine Zugelement ausgehend von einem ersten Befestigungselement an der zentralen Wickelrolle bzw. einer Welle der Wickelrolle die Gleitrollen zwischen den Abschlussteilen und den Armen der Verstellmechanik entweder im Uhrzeigersinn oder entgegen dem Uhrzeigersinn berührt und/oder umschließt und an dem zweiten Befestigungselement des Tragkörpers entweder oberhalb oder unterhalb der Verstellmechanik endet.

In Ausgestaltung sind jeweils obere Enden der beiden hinteren Abschlussteile über eine obere Gleitrolle, jeweils untere Enden der beiden hinteren Abschlussteile über eine unter Gleitrolle, jeweils untere Enden der beiden vorderen Abschlussteile über eine weitere untere Gleitrolle und jeweils obere Enden der beiden vorderen Abschlussteile über eine weitere obere Gleitrolle miteinander verbunden. Zwischen diesen vier genannten Gleitrollen sind weitere Gleitrollen zwischen Enden jeweiliger Arme angeordnet. Dabei ist es möglich, dass das mindestens eine Zugelement ausgehend von der zentralen Wickelrolle die bspw. vier genannten Gleitrollen, die jeweils zwischen zwei Abschlusselementen angeordnet sind und diese verbinden, im Uhrzeigersinn nacheinander zumindest tangiert und oberhalb der Verstellmechanik an dem Befestigungselement des Tragkörpers endet. Alternativ hierzu ist es möglich, dass das mindestens eine Zugelement ausgehend von der Wickelrolle die vier Gleitrollen an den Abschlussteilen entgegen dem Uhrzeigersinn umschließt und an dem Befestigungselement des Tragkörpers unterhalb der Verstellmechanik endet. Das mindestens eine Zugelement tangiert einer jeweiligen Reihenfolge entsprechend auch die weiteren Gleitrollen zwischen jeweils zwei Armen nacheinander entweder im Uhrzeigersinn oder entgegen dem Uhrzeigersinn.

In Ausgestaltung ist das mindestens eine Zugelement als Band, als Seil oder als Kette ausgebildet. Es ist möglich, dass die Verstellvorrichtung zwei oder mehrere Zugelemente aufweist, die die Gleitrollen umschließen und zueinander parallel angeordnet sind. Das mindestens eine Zugelement ist zwischen den beiden Reihen aus Armen der Verstellmechanik angeordnet. Weiterhin sind Wellen der zentralen Wickelrolle und der Gleitrollen zueinander parallel angeordnet.

Die Verstellvorrichtung weist als weitere Komponente mindestens einen Abschnitt bzw. Teil eines Bezugs eines Polsters bzw. für ein Polster der Sitzebene auf. Dabei ist ein erstes Ende dieses Bezugs bspw. an dem Tragkörper der Sitzebene befestigt und/oder mit diesem verbunden. Weiterhin ist ein zweites Ende dieses Bezugs an dem mindestens Zugelement, bspw. entlang eines Anschnitts des mindestens einen Zugelements befestigt und/oder mit diesem verbunden, wobei das zweite Ende des Bezugs an dem mindestens einen Zugelement zu der Wickelrolle stets einen minimalen Mindestabstand aufweist. Bei einer Veränderung der Länge der Verstellmechanik ist vorgesehen, dass sich das zweite Ende des Bezugs mit dem Zugelement bewegt, wenn dieses auf die zentrale Wickelrolle entweder aufgewickelt oder von dieser abgewickelt wird. Es ist möglich, dass das mindestens eine Zugelement und/oder der Bezug der Sitzebene zumindest abschnittsweise oder vollständig elastisch verformbar sein kann bzw. können.

Der erfindungsgemäße Sitz weist eine Ausführungsform der vorgestellten Verstellvorrichtung, üblicherweise als längenverstellbaren Fortsatz des Sitzes, auf. Dabei ist es in Ausgestaltung möglich, dass dieser Sitz für ein Fahrzeug, bspw. ein Kraftfahrzeug, ausgebildet und/oder vorgesehen ist.

Die vorgestellte Verstellvorrichtung bzw. ein entsprechender Sitz-Verstell-Mechanismus kombiniert bzw. verbindet eine Sitztiefenverstellung (STV) mit einer Beinauflagenverstellung (BAV). Neben einer komfortablen und spaltlosen Auflage kann damit einer auf dem Sitz sitzenden Person eine maximale Unterstützungsfläche bereitgestellt werden. Es ist vorgesehen, dass die Verstellvorrichtung, also zumindest die Verstellmechanik, zwei Funktionen mit einer Kinematik, bspw. mit dem mindestens einen Antrieb, bereitstellt und/oder umfasst, womit eine spaltfreie Auflagefläche für die Ober- und Unterschenkel der auf der Sitzebene sitzenden Person erzeugt wird. Ein Aufbau der Verstellvorrichtung ist verglichen mit einer separaten Sitztiefenverstellung und Beinauflagenverstellung relativ kompakt und einfach.

Dabei dienen ein in die Verstellvorrichtung integriertes Rollensystem aus den Gleitrollen sowie der Wickelrolle und das Band als eine Variante des mindestens einen Zugelements als Träger für das eigentliche Polster. In Ausgestaltung sind auch alle anderen Zugelemente, wie zum Beispiel Seile oder Ketten, als Träger für das Polster geeignet. Weiterhin ist vorgesehen, dass jener Teil des Polsters, der zur Auflage der Unterschenkel ausgebildet ist, beim Verlängern der Verstellmechanik und somit der Verstellvorrichtung zunächst überwiegend nach vorne ausfährt und erst zum Ende einer Bewegung stärker nach oben schwenkt und/oder von der Verstellvorrichtung nach oben geschwenkt wird, wobei eine breite Auflage für die Unterschenkel geschaffen wird. Die Verstellvorrichtung, die auch als Sitz-Verstell-Mechanismus ausgebildet sein bzw. bezeichnet werden kann, ist dazu ausgebildet, das Band gleichzeitig mit der Verstell-Bewegung über die Wickelrolle auf- und abzuwickeln. Die zentrale Wickelrolle zum Auf- bzw. Abwickeln des Bandes ist mit einem Drehmoment beaufschlagt, wobei das Band und somit auch das Polster, straff gehalten wird. Mit der Verstellvorrichtung ist eine Vergrößerung der Sitztiefe möglich. Weiterhin ist mit der Verstellvorrichtung eine zweistufige Bewegung mit einer Vergrößerung eines Sitzteils bzw. einer Sitzfläche und einem Ausschwenken der Fußstütze möglich.

Die Verstellvorrichtung ist in Ausgestaltung als Sitz-Verstell-Mechanismus für einen Fahrzeugsitz ausgebildet. Damit ist u. a. eine Sitztiefenverstellung möglich, mit der der Sitz ohne Spalt an einer Vorderkante des Sitzes nach vorne zu vergrößern ist, ohne dabei einen Spalt im Polster bzw. in einem Sitzkissen zu erzeugen. Es ist möglich, die über die Verstellvorrichtung bereitgestellte Beinauflage als separates Teil bzw. Fortsatz der Sitzebene auszufahren. Es ist möglich, die Sitztiefenverstellung und die Beinauflagenverstellung durch die Verstellmechanik in demselben Bauraum zu kombinieren.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.

Figuren 1, 2 und 3 zeigen eine Ausführungsform der erfindungsgemäßen Verstellvorrichtung aus einer ersten Perspektive in unterschiedlichen Stellungen.

Figuren 4 und 5 zeigen die Ausführungsform der erfindungsgemäßen Verstellvorrichtung aus einer weiteren Perspektive in schematischer Darstellung.

Die Figuren werden zusammenhängend und übergreifend beschrieben. Gleichen Bezugszeichen sind dieselben Komponenten zugeordnet.

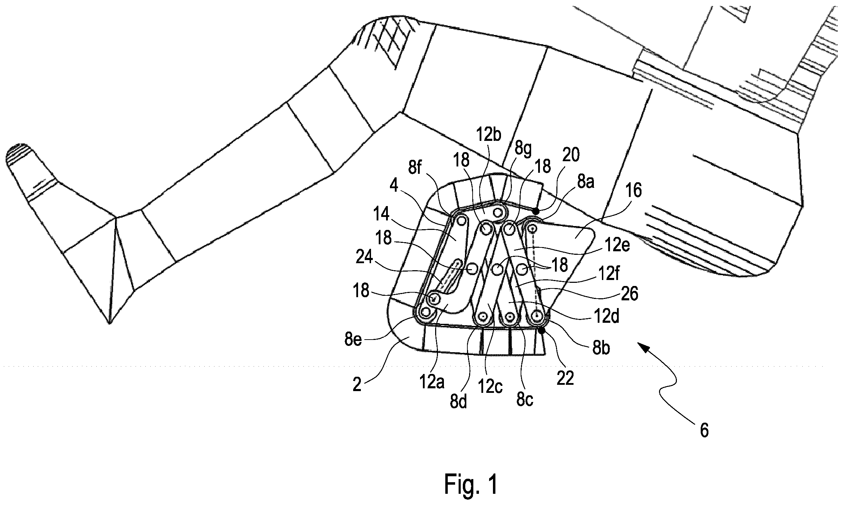

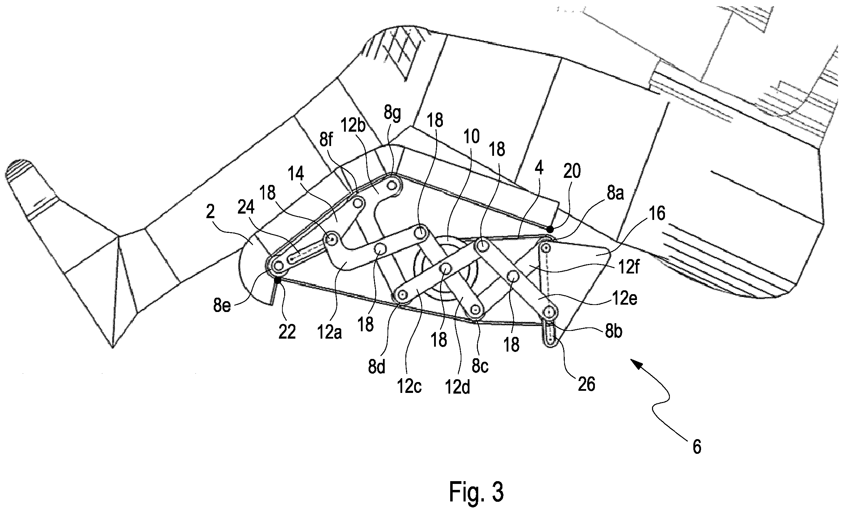

Die anhand der Figuren 1 bis 5 jeweils schematisch dargestellte Ausführungsform der erfindungsgemäßen Verstellvorrichtung ist als Fortsatz für eine Sitzebene eines Sitzes, hier eines Sitzes für ein Fahrzeug, bspw. für ein Kraftfahrzeug, ausgebildet. Dabei zeigen die Figuren 1 und 3 weiterhin ein Bein und einen Fuß einer Person, die auf dem Sitz sitzt.

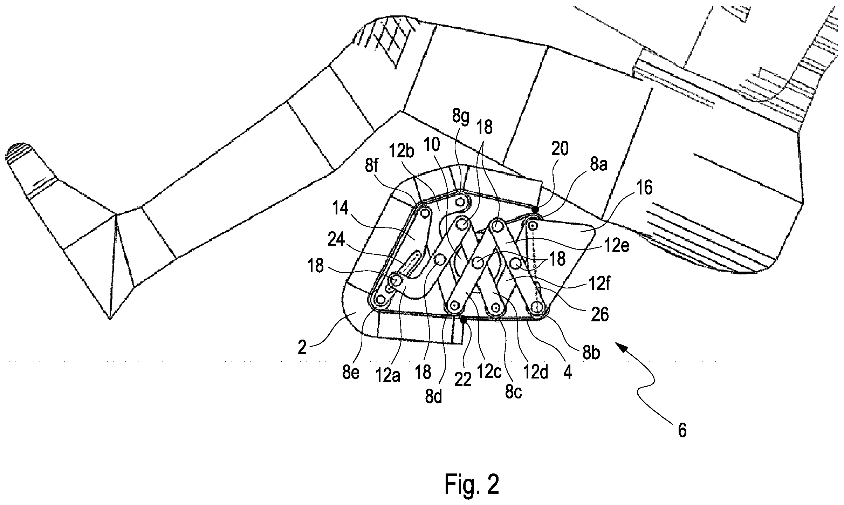

Die vorgestellte Verstellvorrichtung weist eine Verstellmechanik 6 auf, die bezüglich ihrer Länge und/oder Ausdehnung veränderbar bzw. zu verändern ist, wobei für die Verstellmechanik 6 und somit auch für die Verstellvorrichtung unterschiedliche Stellungen einstellbar sind, bei denen unterschiedliche Längen für die Verstellvorrichtung vorgesehen sind. Dabei zeigt Figur 1 die Verstellmechanik 6 in einer eingefahrenen Stellung, wobei die Verstellmechanik 6 und somit auch die Verstellvorrichtung eine minimale Länge aufweist. Dabei berührt nur ein Oberschenkel der Person die Verstellvorrichtung. Dagegen ist die Verstellvorrichtung in der anhand von Figur 2 schematisch dargestellten Stellung gegenüber der Stellung aus Figur 1 ausgefahren und somit verlängert. In der anhand von Figur 3 gezeigten Stellung ist vorgesehen, dass die Verstellvorrichtung gegenüber der Stellung aus Figur 2 noch weiter ausgefahren bzw. verlängert ist und in diesem Fall eine maximale Länge aufweist. Dabei berühren sowohl der Oberschenkel als auch ein Unterschenkel des Beins der Person die Verstellvorrichtung oben und vorne.

Die Verstellmechanik 6 umfasst hier zwei zueinander parallel angeordnete Reihen aus Armen 12a, 12b, 12c, 12d, 12e, 12f und zwei Abschlussteilen 14, 16, nämlich ein vorderes Abschlussteil 14 und ein hinteres Abschlussteil 16, zwischen denen die Arme 12a, 12b, 12c, 12d, 12e, 12f einer jeweiligen Reihe angeordnet sind. Dabei sind die Arme 12a, 12b, 12c, 12d, 12e, 12f einer jeweiligen Reihe als Nürnberger Schere ausgebildet und/oder als eine solche zu bezeichnen und relativ zueinander bewegbar bzw. zu bewegen.

Außerdem ist hier vorgesehen, dass das hier bspw. dreieckig ausgebildete hintere Abschlussteil 16 einem hier nicht weiter dargestellten Tragkörper der Sitzebene des Sitzes zugewandt und mit diesem verbunden bzw. daran befestigt ist. Das hintere Abschlussteil 16 weist ein Langloch 26 auf, das sich ausgehend von einem unteren Ende des hinteren Abschlussteils 16 nach oben erstreckt. Dagegen ist jeweils ein vorderes Abschlussteil 14 von dem Tragkörper abgewandt und dreieckig, hier wie ein Dreieck mit einem stumpfen Winkel, ausgebildet. Außerdem ist hier vorgesehen, dass das vordere Abschlussteil 14 ein Langloch 24 aufweist, das sich ausgehend von einem unteren Ende in Richtung einer Mitte des vorderen Abschlussteils 14 nach oben erstreckt.

Bei der hier vorgestellten Ausführungsform umfasst die Verstellmechanik 6 pro Reihe zwei vordere Arme 12a, 12b, zwei mittlere Arme 12c, 12d und zwei hintere Arme 12e, 12f. Außerdem weist die Verstellvorrichtung hier im Uhrzeigersinn nacheinander eine erste Gleitrolle 8a, eine zweite Gleitrolle 8b, eine dritte Gleitrolle 8c, eine vierte Gleitrolle 8d, eine fünfte Gleitrolle 8e, eine sechste Gleitrolle 8f und eine siebte Gleitrolle 8g auf, die der Verstellmechanik 6 zugeordnet sind.

Bei der hier vorgestellten Ausführungsform der Verstellvorrichtung ist ein unteres Ende des vorderen Abschlussteils 14 mit der fünften Gleitrolle 8e und ein oberes Ende des vorderen Abschlussteils 14 mit der sechsten Gleitrolle 8f verbunden, wobei Enden von den vorderen Abschlussteilen 14 beider Reihen über die jeweilige Gleitrolle 8e, 8f, üblicherweise eine Welle der jeweiligen Gleitrolle 8e, 8f, miteinander verbunden sind, die zwischen den beiden vorderen Abschlussteilen 14 beider Reihen angeordnet ist, wobei die unteren Enden der vorderen Abschlussteile 14 über die fünfte Gleitrolle 8e und die oberen Enden der beiden vorderen Abschlussteile 14 mit der sechsten Gleitrolle 8f miteinander verbunden sind. Entsprechend ist ein unteres Ende des hinteren Abschlussteils 16 mit der zweiten Gleitrolle 8b und ein oberes Ende des hinteren Abschlussteils 16 mit der ersten Gleitrolle 8a verbunden, wobei Enden von den hinteren Abschlussteilen 16 beider Reihen über die jeweilige Gleitrolle 8a, 8b, üblicherweise eine Welle der jeweiligen Gleitrolle 8a, 8b, miteinander verbunden sind, die zwischen den beiden hinteren Abschlussteilen 16 beider Reihen angeordnet ist, wobei die unteren Enden der hinteren Abschlussteile 16 über die zweite Gleitrolle 8b und die oberen Enden der beiden hinteren Abschlussteile 16 mit der ersten Gleitrolle 8a miteinander verbunden sind.

Unmittelbar hinter dem vorderen Abschlussteil 14 sind in jeweils einer Reihe zwei hier gebogene, je nach Definition L-förmige, vordere Arme 12a, 12b angeordnet. Dabei weist jeder dieser beiden vorderen Arme 12a, 12b einen langen Abschnitt und einen kurzen Abschnitt auf, wobei diese beiden Abschnitte hier unter einem Winkel von 90° zueinander orientiert bzw. angeordnet sind. Ungefähr in der Mitte des längeren Abschnitts des jeweiligen vorderen Arms 12a, 12b sind diese beiden Arme 12a, 12b über ein Drehelement 18 miteinander drehbar verbunden. Weiterhin ist ein Ende eines kurzen Abschnitts des ersten vorderen Arms 12a ebenfalls über ein Drehelement 18, das hier in dem Langloch 24 des vorderen Abschlussteils 14 beweglich angeordnet ist, entlang des Langlochs 24 und somit auch relativ zu dem vorderen Abschlussteil 14 verschiebbar bzw. zu verschieben.

Ein Ende des langen Abschnitts des ersten vorderen Arms 12a ist über ein Drehelement 18 mit einem oberen Ende eines zweiten mittleren Arms 12d der jeweiligen Reihe drehbar verbunden. Weiterhin ist eine Biegung zwischen den beiden Abschnitten des zweiten vorderen Arms 12b mit dem oberen Ende des vorderen Abschlussteils 14 und mit der sechsten Gleitrolle 8f bzw. ihrer Welle drehbar verbunden, die auch mit den Biegungen zwischen den beiden Abschnitten der zweiten vorderen Arme 12b beider Reihen drehbar verbunden ist. Ein Ende des langen Abschnitts des zweiten vorderen Arms 12b ist hier mit einem ersten unteren Ende eines ersten mittleren Arms 12c einer jeweiligen Reihe über die vierte Gleitrolle 8d drehbar verbunden, wobei diese vierte Gleitrolle 8d jeweils die beiden unteren Enden des zweiten vorderen und des ersten mittleren Arms 12b, 12c beider Reihen drehbar verbindet. Ein Ende des kurzen Abschnitts des zweiten vorderen Arms 12b einer ersten der beiden Reihen ist entsprechend mit einem Ende des kurzen Abschnitts des zweiten vorderen Arms 12b einer zweiten der beiden Reihen über die siebte Gleitrolle 8g bzw. deren Welle drehbar verbunden.

Die beiden geraden mittleren Arme 12c, 12d einer jeweiligen Reihe sind ungefähr in ihrer Mitte miteinander über eine Welle einer zentralen Wickelrolle 10 miteinander verbunden, wobei die zentrale Wickelrolle 10 zwischen den mittleren geraden Armen 12c, 12d beider Reihen angeordnet ist und die beiden Reihen verbindet, wobei die beiden mittleren Arme 12c, 12d der jeweiligen Reihe um die Welle der zentralen Wickelrolle 10 herum relativ zueinander drehbar sind. Ein oberes Ende des ersten mittleren Arms 12c und ein oberes Ende eines ersten hinteren Arms 12e jeweils einer Reihe sind über ein Drehelement 18 miteinander drehbar verbunden. Außerdem ist die zentrale Wickelrolle 10 von den um sie herum angeordneten Gleitrollen 8a, 8b, 8c, 8d, 8e, 8f, 8g umgeben und/oder umschlossen, wobei Wellen der Wickelrolle 10 und der Gleitrollen 8a, 8b, 8c, 8d, 8e, 8f, 8g zueinander parallel angeordnet sind.

Ein unteres Ende des zweiten mittleren Arms 12d und ein unteres Ende eines zweiten hinteren Arms 12 f jeweils einer Reihe sind über die dritte Gleitrolle 8c bzw. deren Welle miteinander drehbar verbunden, wobei diese dritte Gleitrolle 8c auch jeweils die unteren Enden der beiden Arme 12d, 12f beider Reihen miteinander verbindet und dabei zwischen den beiden Reihen angeordnet ist.

Die beiden hinteren Arme 12e, 12f einer jeweiligen Reihe sind ungefähr mittig über ein Drehelement 18 miteinander drehbar verbunden. Ein unteres Ende des ersten geraden hinteren Arms 12e einer jeweiligen Reihe ist über eine Welle der zweiten Drehrolle 8b mit dem hinteren Anschlussteil 16 verbunden und entlang des Langlochs 26 relativ zu dem hinteren Abschlussteil 16 verschiebbar bzw. zu verschieben. Weiterhin verbindet die zweite Drehrolle 8b jeweils den ersten hinteren Arm 12e und das hintere Abschlussteil 16 beider Reihen und ist entsprechend zwischen den beiden Reihen angeordnet. Weiterhin ist ein oberes Ende eines zweiten geraden hinteren Arms 12f mit einem oberen Ende des hinteren Abschlussteils 16 über eine Welle der ersten Gleitrolle 8a drehbar verbunden. Hierbei ist zudem vorgesehen, dass zwischen den oberen Enden des zweiten hinteren Arms 12f und des hinteren Abschlussteils 16 einer jeweiligen Reihe die erste Gleitrolle 8a angeordnet ist, die diese drehbar verbindet.

Außerdem weist die Verstellvorrichtung zwei hier als Bänder 4 ausgebildete Zugelemente auf, die zwischen den beiden Reihen aus Armen 12a, 12b, 12c, 12d, 12e, 12f und Abschlussteilen 14, 16 angeordnet sind, wobei jeweils ein erstes Ende jeweils eines Bands 4 an der Wickelrolle 10 befestigt ist. Ein zweites Ende des jeweiligen Bands 4 ist mit dem Tragkörper über ein Befestigungselement 20 verbunden, wobei das jeweilige Band 4 hier sämtliche Gleitrollen 8a, 8b, 8c, 8d, 8e, 8f, 8g ausgehend von der Wickelrolle 10 bis zum Befestigungselement 20 im Uhrzeigersinn umschließt.

Dabei ist vorgesehen, dass beide Bänder 4 als Träger für einen Bezug 2 eines Polsters der Sitzebene ausgebildet sind, wobei ein erstes Ende des Bezugs 2 des Polsters über mindestens ein weiteres Befestigungselement 22 mit jeweils einem Band 4, an dem dieses mindestens eine weitere Befestigungselement 22 angeordnet ist, verbunden bzw. daran befestigt ist. Ein weiteres zweites Ende des Bezugs 2 ist über das mindestens eine Befestigungselement 20, mit dem auch das mindestens eine Band 4 verbunden ist, mit dem Tragkörper der Sitzebene und dem zweiten Ende des jeweiligen Bands 4 verbunden bzw. daran befestigt.

Die hier vorgestellte Ausführungsform der Verstellvorrichtung ist als Beinauflage für die Oberschenkel und Unterschenkel der auf dem Sitz sitzenden Person ausgebildet. Ein darin integriertes Rollensystem aus den Gleitrollen 8a, 8b, 8c, 8d, 8e, 8f, 8g und der Wickelrolle 10 und die Bänder 4 dienen als Träger für den Bezug 2 und somit für das Polster. Alternativ zu der hier gezeigten Ausführungsform sind statt eines jeweiligen Bands 4 auch alle anderen Zugelemente, wie zum Beispiel Seile oder Ketten als Träger für das Polster geeignet.

Zum Betreiben der Verstellvorrichtung wird auf die drei möglichen Zustände verwiesen, die anhand der Figuren 1 bis 3 angedeutet sind, wobei Figur 1 die Verstellvorrichtung in einer eingefahrenen ersten Stellung bzw. Position zeigt, wobei die Verstellvorrichtung je nach Definition lediglich die Sitzebene des Sitzes nach vorne abschließt und entsprechend begrenzt. Dagegen zeigt Figur 3 die Verstellvorrichtung in einer ausgefahrenen dritten Stellung bzw. Position, wobei sie als Fortsatz bzw. als ausgefahrene Verlängerung der Sitzebene sowie als Beinauflage dient bzw. verwendet werden kann. Figur 2 zeigt die Verstellvorrichtung in einer möglichen zweiten Stellung bzw. Position zur Vergrößerung der Sitztiefe der Sitzebene zwischen den beiden anhand der beiden Figuren 1 und 3 gezeigten ein- und ausgefahrenen bzw. ersten und zweiten Stellungen. Beim Betrieb der Verstellvorrichtung zum Verstellen des Sitzes ist vorgesehen, dass jener Teil bzw. Abschnitt des Bezugs 2 bzw. des Polsters, der zur Auflage der Unterschenkel vorgesehen ist, ausgehend von der ersten Stellung zunächst überwiegend nach vorne ausfährt und erst zum Ende bzw. Abschluss einer dabei durchgeführten bzw. durchführbaren Bewegung ausgehend von der zweiten Stellung stärker nach oben schwenkt, um in der dritten Stellung eine breite Auflage für die Unterschenkel bereitzustellen.

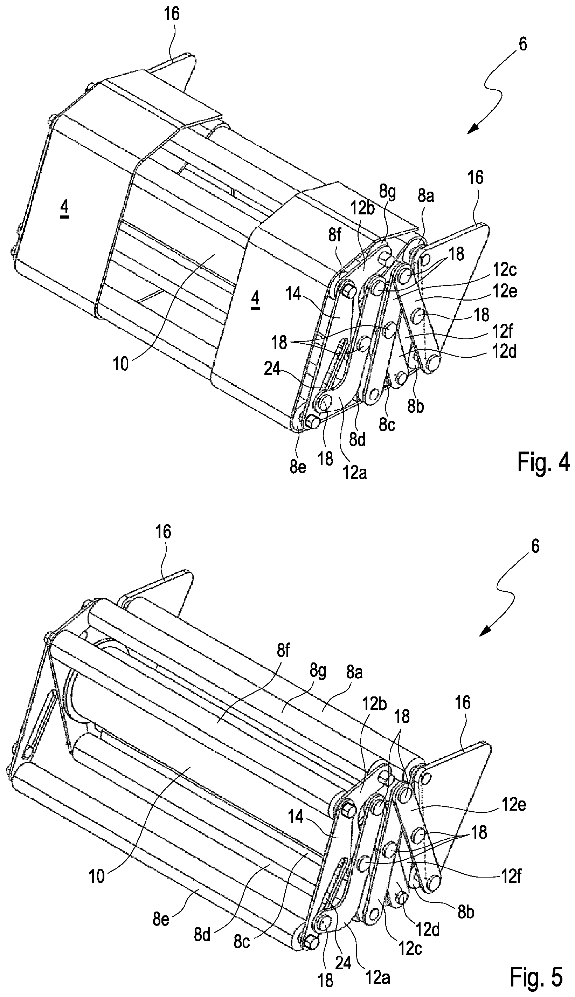

Weiterhin zeigt Figur 4 die Verstellvorrichtung ohne Bezug 2 für das Polster aus der zweiten Perspektive. Figur 5 zeigt die Verstellvorrichtung ohne die beiden Bänder 4 und somit lediglich die Verstellmechanik 6 und einige der Gleitrollen 8a, 8b, 8c, 8d, 8e, 8f, 8g.

Dabei ist die Wickelrolle 10 beim Ausfahren und/oder Verlängern der Verstellvorrichtung ausgehend von der ersten Stellung zu der zweiten und/oder dritten Stellung dazu ausgebildet, die Bänder 4 abzuwickeln und einen außerhalb der Wickelrolle 10 angeordneten Teil bzw. Abschnitt des jeweiligen Bands 4 zu vergrößern. Umgekehrt ist die Wickelrolle 10 beim Einfahren und/oder Verkürzen der Verstellvorrichtung ausgehend von der dritten Stellung zu der zweiten und/oder ersten Stellung dazu ausgebildet, die Bänder 4 aufzuwickeln und einen außerhalb der Wickelrolle 10 angeordneten Teil bzw. Abschnitt des jeweiligen Bands 4 zu verkleinern.

Zum Bewegen der Verstellvorrichtung und einer dabei stellungs- bzw. positionsabhängigen Änderung der Länge der Verstellvorrichtung weist diese mindestens einen nicht weiter dargestellten elektrischen und/oder mechanischen, bspw. automatischen, Antrieb auf, der mit der Wickelrolle 10 und/oder mindestens einem Arm 12a, 12b, 12c, 12d, 12e, 12f und/oder mindestens einem Abschlussteil 14, 16 der Verstellmechanik 6 verbunden und dazu ausgebildet ist, die Wickelrolle 10 zu drehen und/oder eine Länge der Verstellmechanik 6 zu ändern. Alternativ oder ergänzend ist bzw. wird die zentrale Wickelrolle 10 zum Auf- und Abwickeln der Bänder 4, bspw. über ein elastisches Bauteil, bspw. eine Feder, mit einem Drehmoment beaufschlagt, wobei dieses elastische Bauteil dazu ausgebildet ist, die Bänder 4 und auch den Bezug 2 für das Polster straff zu halten. Bei einer jeweiligen Bewegung zum Ändern der Länge der Verstellvorrichtung zwischen jeweils zwei Positionen gleitet und/oder rollt jeweils ein Band 4 auf bzw. entlang der Gleitrollen 8a, 8b, 8c, 8d, 8e, 8f, 8g und bewegt sich dabei relativ zu den Gleitrollen 8a, 8b, 8c, 8d, 8e, 8f, 8g.

Die hier beschriebene Ausführungsform der Verstellvorrichtung verändert beim Betrieb eine Oberfläche des Polsters für die Oberschenkel und die Unterschenkel der Person und stellt dabei eine Funktion zum Verstellen der Sitztiefe und beim weiteren Ausfahren auch eine Funktion zum Bereitstellen einer Auflage für die Unterschenkel bereit, ohne im Sitz bzw. in der entsprechend längenverstellten Sitzebene zwischen den Stellungen einen Spalt zu erzeugen.

### BEZUGSZEICHEN:

- 2: Bezug
- 4: Band
- 6: Verstellmechanik
- 8a, 8b 8c, 8d 8e, 8f, 8g: Gleitrolle
- 10: Wickelrolle
- 12a, 12b 12c, 12d 12e, 12f: Arm
- 14, 16: Abschlussteil
- 18: Drehelement
- 20, 22: Befestigungselement
- 24, 26: Langloch

## Patentansprüche

1. Verstellvorrichtung für einen Sitz, die als Fortsatz einer Sitzebene des Sitzes ausgebildet ist, wobei die Verstellvorrichtung eine längenverstellbare Verstellmechanik (6) und mindestens ein elastisches Zugelement aufweist, wobei die Verstellmechanik (6) eine zentrale Wickelrolle (10), mehrere Gleitrollen (8a, 8b, 8c, 8d, 8e, 8f, 8g), mindestens ein vorderes Abschlussteil (14) und mindestens ein hinteres Abschlussteil (16) aufweist, wobei jedes Abschlussteil (14, 16) mit mindestens einer Gleitrolle (8a, 8b, 8c, 8d, 8e, 8f, 8g) verbunden ist, wobei ein erstes Ende des mindestens einen Zugelements an der zentrale Wickelrolle (10) befestigt ist, wobei das mindestens eine Zugelement ausgehend von der zentralen Wickelrolle (10) die Gleitrollen (8a, 8b, 8c, 8d, 8e, 8f, 8g) berührt, wobei ein zweites Ende des mindestens einen Zugelements an einem Befestigungselement (20) eines Tragkörpers der Sitzebene befestigt ist.

2. Verstellvorrichtung nach Anspruch 1, bei dem die Abschlussteile (14, 16) die Verstellmechanik (6) begrenzen, wobei die Wickelrolle (10) dazu ausgebildet ist, bei einer Änderung einer Länge der Verstellmechanik (6) das mindestens eine Zugelement jeweils aufzuwickeln oder abzuwickeln, wobei das mindestens eine Zugelement auf den Gleitrollen (8a, 8b, 8c, 8d, 8e, 8f, 8g) gleitet.

3. Verstellvorrichtung nach Anspruch 1 oder 2, bei der die Verstellmechanik (6) mindestens eine Reihe aus mehreren Arme (12a, 12b, 12c, 12d, 12e, 12f) aufweist, wobei die Arme (12a, 12b, 12c, 12d, 12e, 12f) der mindestens einen Reihe zwischen jeweils einem vorderen und einem hinteren Abschlussteil (14, 16) angeordnet sind, und/oder bei der jeweils zwei Arme (12a, 12b, 12c, 12d, 12e, 12f) über mindestens ein Drehelement (18) miteinander verbunden sind, und/oder bei der jeweils mindestens ein Ende jeweils eines Arms (12a, 12b, 12c, 12d, 12e, 12f) mit einer Gleitrolle (8a, 8b, 8c, 8d, 8e, 8f, 8g) verbunden ist.

4. Verstellvorrichtung nach Anspruch 3, bei der die Verstellmechanik (6) zwei zueinander parallel angeordnete Reihen aus mehreren Armen (12a, 12b, 12c, 12d, 12e, 12f) aufweist, die zwischen zwei Abschlussteilen (14, 16) angeordnet sind, und/oder bei der jeweils eine Gleitrolle (8a, 8b, 8c, 8d, 8e, 8f, 8g) jeweilige Enden von zwei Armen (12a, 12b, 12c, 12d, 12e, 12f) einer ersten Reihe und einer zweiten Reihe verbindet.

5. Verstellvorrichtung nach einem der voranstehenden Ansprüche, bei der jedes Abschlussteil (14, 16) ein oberes und ein unteres Ende aufweist, wobei jedes obere Ende und jedes untere Ende eines jeweiligen Abschlussteils (14, 16) mit einer Gleitrolle (8a, 8b, 8c, 8d, 8e, 8f, 8g) verbunden ist, und/oder bei der zwei vordere Abschlussteile (14) und zwei hintere Abschlussteile (16) zueinander parallel angeordnet und jeweils über mindestens eine Gleitrolle (8a, 8b, 8c, 8d, 8e, 8f, 8g) miteinander verbunden sind.

6. Verstellvorrichtung nach einem der voranstehenden Ansprüche, bei der das mindestens eine Zugelement als Band (4) ausgebildet ist.

7. Verstellvorrichtung nach einem der voranstehenden Ansprüche, bei dem ein Ende eines Bezugs (2) der Sitzebene an dem mindestens einen Zugelement befestigt ist.

8. Sitz, der eine Verstellvorrichtung nach einem der voranstehenden Ansprüche aufweist.

9. Sitz nach Anspruch 8, der für ein Fahrzeug vorgesehen ist.

## Claims

1. An adjustment device for a seat, which is designed as an extension of a seat plane of the seat, wherein the adjustment device has a length-adjustable adjustment mechanism (6) and at least one elastic tension element, wherein the adjustment mechanism (6) has a central winding roller (10), multiple sliding rollers (8a, 8b, 8c, 8d, 8e, 8f, 8g), at least one front end part (14), and at least one rear end part (16), wherein each end part (14, 16) is connected to at least one sliding roller (8a, 8b, 8c, 8d, 8e, 8f, 8g), wherein a first end of the at least one tension element is fastened to the central winding roller (10), wherein the at least one tension element, starting from the central winding roller (10), touches the sliding rollers (8a, 8b, 8c, 8d, 8e, 8f, 8g), wherein a second end of the at least one tension element is fastened to a fastening element (20) of a supporting body of the seat plane.

2. The adjustment device according to claim 1, in which the end parts (14, 16) delimit the adjustment mechanism (6), wherein the winding roller (10) is designed to wind or unwind the at least one tension element when a length of the adjustment mechanism (6) is changed, wherein the at least one tension element slides on the sliding rollers (8a, 8b, 8c, 8d, 8e, 8f, 8g).

3. The adjustment device according to claim 1 or 2, in which the adjustment mechanism (6) has at least one row made up of multiple arms (12a, 12b, 12c, 12d, 12e, 12f), wherein the arms (12a, 12b, 12c, 12d, 12e, 12f) of the at least one row are arranged between a front and a rear end part (14, 16), and/or in which each two arms (12a, 12b, 12c, 12d, 12e, 12f) are connected to one another via at least one rotating element (18), and/or in which at least one end of each arm (12a, 12b, 12c, 12d, 12e, 12f) is connected to a sliding roller (8a, 8b, 8c, 8d, 8e, 8f, 8g).

4. The adjustment device according to claim 3, in which the adjustment mechanism (6) has two rows of multiple arms (12a, 12b, 12c, 12d, 12e, 12f) arranged parallel to one another, which are arranged between two end parts (14, 16), and/or in which a respective sliding roller (8a, 8b, 8c, 8d, 8e, 8f, 8g) connects respective ends of two arms (12a, 12b, 12c, 12d, 12e, 12f) of a first row and a second row.

5. The adjustment device according to any one of the preceding claims, in which each end part (14, 16) has an upper and a lower end, wherein each upper end and each lower end of a respective end part (14, 16) is connected to a sliding roller (8a, 8b, 8c, 8d, 8e, 8f, 8g), and/or in which two front end parts (14) and two rear end parts (16) are arranged parallel to one another and are each connected to one another via at least one sliding roller (8a, 8b, 8c, 8d, 8e, 8f, 8g).

6. The adjustment device according to any one of the preceding claims, in which the at least one tension element is designed as a band (4).

7. The adjustment device according to any one of the preceding claims, in which one end of a cover (2) of the seat plane is fastened to the at least one tension element.

8. A seat having an adjustment device according to any one of the preceding claims.

9. The seat according to claim 8, which is intended for a vehicle.

## Revendications

1. Dispositif de réglage pour un siège, qui est conçu en tant que prolongement d'un plan d'assise du siège, dans lequel le dispositif de réglage présente un mécanisme de réglage réglable en longueur (6) et au moins un élément de traction élastique, dans lequel le mécanisme de réglage (6) présente un rouleau d'enroulement central (10), plusieurs rouleaux de glissement (8a, 8b, 8c, 8d, 8e, 8f, 8g), au moins une partie d'extrémité avant (14) et au moins une partie d'extrémité arrière (16), dans lequel chaque partie d'extrémité (14, 16) est connectée à au moins un rouleau de glissement (8a, 8b, 8c, 8d, 8e, 8f, 8g), dans lequel une première extrémité de l'au moins un élément de traction est fixée au rouleau d'enroulement central (10), dans lequel l'au moins un élément de traction touche les rouleaux de glissement (8a, 8b, 8c, 8d, 8e, 8f, 8g) à partir du rouleau d'enroulement central (10), dans lequel une seconde extrémité de l'au moins un élément de traction est fixée à un élément de fixation (20) d'un corps de support du plan d'assise.

2. Dispositif de réglage selon la revendication 1, dans lequel les parties d'extrémité (14, 16) délimitent le mécanisme de réglage (6), dans lequel le rouleau d'enroulement (10) est conçu pour enrouler ou dérouler l'au moins un élément de traction lors d'une modification d'une longueur du mécanisme de réglage (6), dans lequel l'au moins un élément de traction glisse sur les rouleaux de glissement (8a, 8b, 8c, 8d, 8e, 8f, 8g).

3. Dispositif de réglage selon la revendication 1 ou 2, dans lequel le mécanisme de réglage (6) présente au moins une rangée de plusieurs bras (12a, 12b, 12c, 12d, 12e, 12f), dans lequel les bras (12a, 12b, 12c, 12d, 12e, 12f) de l'au moins une rangée sont disposés entre respectivement une partie d'extrémité avant et une partie d'extrémité arrière (14, 16), et/ou dans lequel respectivement deux bras (12a, 12b, 12c, 12d, 12e, 12f) sont connectés entre eux par l'intermédiaire d'au moins un élément rotatif (18), et/ou dans lequel respectivement au moins une extrémité respectivement d'un bras (12a, 12b, 12c, 12d, 12e, 12f) est connectée à un rouleau de glissement (8a, 8b, 8c, 8d, 8e, 8f, 8g).

4. Dispositif de réglage selon la revendication 3, dans lequel le mécanisme de réglage (6) présente deux rangées disposées parallèlement l'une à l'autre composées de plusieurs bras (12a, 12b, 12c, 12d, 12e, 12f), qui sont disposées entre deux parties d'extrémité (14, 16), et/ou dans lequel respectivement un rouleau de glissement (8a, 8b, 8c, 8d, 8e, 8f, 8g) connecte les extrémités respectives de deux bras (12a, 12b, 12c, 12d, 12e, 12f) d'une première rangée et d'une seconde rangée.

5. Dispositif de réglage selon l'une quelconque des revendications précédentes, dans lequel chaque partie d'extrémité (14, 16) présente une extrémité supérieure et une extrémité inférieure, dans lequel chaque extrémité supérieure et chaque extrémité inférieure d'une partie d'extrémité respective (14, 16) est connectée à un rouleau de glissement (8a, 8b, 8c, 8d, 8e, 8f, 8g) et/ou dans lequel deux parties d'extrémité avant (14) et deux parties d'extrémité arrière (16) sont disposées parallèlement l'une à l'autre et sont connectées entre elles par au moins un rouleau de glissement (8a, 8b, 8c, 8d, 8e, 8f, 8g).

6. Dispositif de réglage selon l'une quelconque des revendications précédentes, dans lequel l'au moins un élément de traction est conçu en tant que bande (4).

7. Dispositif de réglage selon l'une quelconque des revendications précédentes, dans lequel une extrémité d'une housse (2) du plan d'assise est fixée à l'au moins un élément de traction.

8. Siège qui présente un dispositif de réglage selon l'une quelconque des revendications précédentes.

9. Siège selon la revendication 8, qui est prévu pour un véhicule.
